# NEUE EUROPÄISCHE PATENTSCHRIFT

(11) **EP 0 732 047 B2**
(45) Veröffentlichungstag und Bekanntmachung des Hinweises auf die Entscheidung über den Einspruch: **28.01.2004**
(45) Hinweis auf die Patenterteilung: 20.09.2000
(21) Anmeldenummer: 95113586.2
(22) Anmeldetag: 30.08.1995
(51) Int. Cl.: A01D 51/00, A01D 33/10, A01D 89/00

(54) **Aufnahmegerät für eine selbstfahrende Lade- und Reinigungsvorrichtung für Zuckerrüben oder dgl.**
Pick-up for loader-cleaner for beet
Dispositif ramasseur pour chargeur-nettoyeur automobile pour betteraves

(30) Priorität: 17.03.1995 DE 29504551 U
(43) Veröffentlichungstag der Anmeldung: 18.09.1996
(73) Patentinhaber: Paintner, Hermann, 84097 Herrngiersdorf (DE)
(72) Erfinder: Paintner, Hermann, 84097 Herrngiersdorf (DE)
(74) Vertreter: Gustorf, Gerhard, Dipl.-Ing.

(56) Entgegenhaltungen:
- EP-A- 0 043 156
- DE-C- 2 721 125
- DE-U- 8 714 059
- DE-U- 8 803 259
- DE-U- 8 809 672

## Beschreibung

Die Erfindung betrifft ein Aufnahmegerät für eine selbstfahrende Lade- und Reinigungsvorrichtung für Zuckerrüben oder dgl. mit einem in Fahrtrichtung vorn angebrachten Aufnehmerorgan und nachgeordneten Sammelwalzen für die Übergabe der Rüben in einen Weitergabeförderer.

Mit Hilfe einer derartigen Lade- und Reinigungsvorrichtung werden geerntete und zu großen Haufen geschichtete Zuckerrüben oder dgl. aufgenommen, um sie in einen bereitstehenden Lastkraftwagen zu entladen. Bei den bisher verwendeten Aufnahmegeräten der eingangs beschriebenen Bauart werden die Rüben auf den Sammelwalzen nach innen gefördert, wo sie von dem mittig angeordneten Weitergabeförderer erfaßt werden. Sowohl auf dem Aufnehmerorgan als auch auf den Sammelwalzen findet eine Vorreinigung der Rüben statt.

Bei kegelförmigen oder kegelstumpfförmigen Rübenhaufen lagert über die Breite des Aufnehmerorgans gesehen die größte Rübenmenge und damit auch die größte Schmutzmenge im mittleren Bereich des Haufens. Beim Einsatz der bisher bekannten Aufnahmegeräte kommt es daher häufig zu Erdaufstauungen und Verstopfungen, da die in der Mitte aufgenommenen und stark verschmutzten Rüben größtenteils im mittleren Bereich des Aufnahmegerätes vorgereinigt werden.

Ein Aufnahmegerät der im Oberbegriff des Patentanspruchs 1 angegebenen Bauart ist bekannt aus DE-U 88 09 672. Dort besteht das Aufnahmeorgan aus vier Förderwalzen, die das Erntegut zur Mitte hin fördern. Den Förderwalzen ist ein Rüttelbalken vorgelagert, der über einen Exzenter in Bewegung gesetzt wird. Hinter der in Förderrichtung letzten Schneckenwalze der Aufnahmeeinrichtung ist mittig ein Reinigungsband angeordnet, so daß erst an dieser Stelle hinter dem Aufnahmeorgan die Rüben von anhaftendem Erdreich befreit werden.

Gegenstand der EP-A 43 156 ist eine Erntemaschine für Heu mit integrierter Ballenpresse. Um zu erreichen, daß das Aufnahmeorgan das zu pressende Heu in gleichmäßiger Dichte aufnimmt, ist in Förderrichtung vor dem Aufnahmeorgan eine Verteileinheit angebracht. Diese kann entweder aus in Querrichtung hinund herbeweglichen Zinken oder aus einer Walze mit nach außen fördernden Schneckengängen sein.

In der DE-C 27 21 125 ist eine mehrreihige Rübenerntemaschine beschrieben und dargestellt, bei der die über die ganze Breite von den Rodescharen aufgenommenen Rüben in einem Verdichtungsbereich zusammengezogen und von dort mit größerer Geschwindigkeit zu einer mittigen oder seitlichen Schwadablage umgelenkt werden. Hierzu ist eine in Förderrichtung steigende Umfangsgeschwindigkeit der Reinigungswalzen vorgesehen, deren Wendeln eine in Richtung auf den Verdichtungsbereich zunehmende Steigung haben.

Der Erfindung liegt die Aufgabe zugrunde, ein Aufnahmegerät der angegebenen Gattung so weiterzubilden, daß die Reinigung der Rüben weiter verbessert wird, bevor diese auf den Weitergabeförderer gelangen.

Gemäß der Erfindung wird diese Aufgabe durch ein Aufnahmegerät mit den Merkmalen des Patentanspruchs 1 gelöst.

Mit dieser Lösung wird erreicht, daß die Rüben hinter dem Aufnehmerorgan nicht sogleich zur Mitte hin transportiert werden, wo sie auf den Weitergabeförderer gelangen, sondern daß sie zuvor nach beiden Seiten hin auseinandergezogen werden, so daß der Weg der Rüben vor der Übergabe auf den Weitergabeförderer vergrößert wird, was sich auf eine Reinigung der Rüben sehr vorteilhaft auswirkt. Die Rüben werden mitsamt dem anhaftenden und beigemengten Erdreich aus der Haufenmitte entnommen und auf dem Aufnahmegerät nach außen hin verteilt, wodurch auch eine gleichmäßige Erdverteilung gewährleistet ist.

Es ist vorteilhaft, wenn die Verteilerwalzen - ebenso wie die Sammelwalzen - als Schneckenwalzen ausgebildet sind. Dabei kann vorgesehen werden, daß jede Schneckenwalze an ihrem nach außen weisenden Ende einen Abschnitt mit zu den übrigen Schraubengängen gegenläufigen, nach innen fördernden Schraubengängen hat. Auf diese Weise werden die Rüben an den äußeren Enden der Verteilerwalzen bereits wieder zur Mitte hin umgelenkt, so daß ein Stau oder eine Haufenbildung an den beiden Seitenwänden des Gerätes vermieden wird.

Nach einem weiteren Merkmal der Erfindung ist zwischen den Verteilerwalzen und den Sammelwalzen eine konische Übergabewalze angeordnet, deren Ende kleineren Durchmessers an der Außenseite des Aufnahmegerätes liegt. Diese Übergabewalze sorgt für einen störungsfreien Weitertransport der Rüben zu den Sammelwalzen.

Die Erfindung ist nachstehend an Ausführungsbeispielen erläutert, die in der Zeichnung dargestellt sind. Es zeigen:
Figur 1 eine Ansicht einer selbstfahrenden Ladeund Reinigungsvorrichtung für Rüben mit einem Aufnahmegerät,
Figur 2 die Draufsicht eines Aufnahmegerätes gemäß der Erfindung,
Figur 3 eine Seitenansicht des Aufnahmegerätes der Figur 2,
Figur 4 eine Draufsicht eines abgeänderten Ausführungsbeispiels und
Figur 5 die Seitenansicht des Aufnahmegerätes der Figur 4.

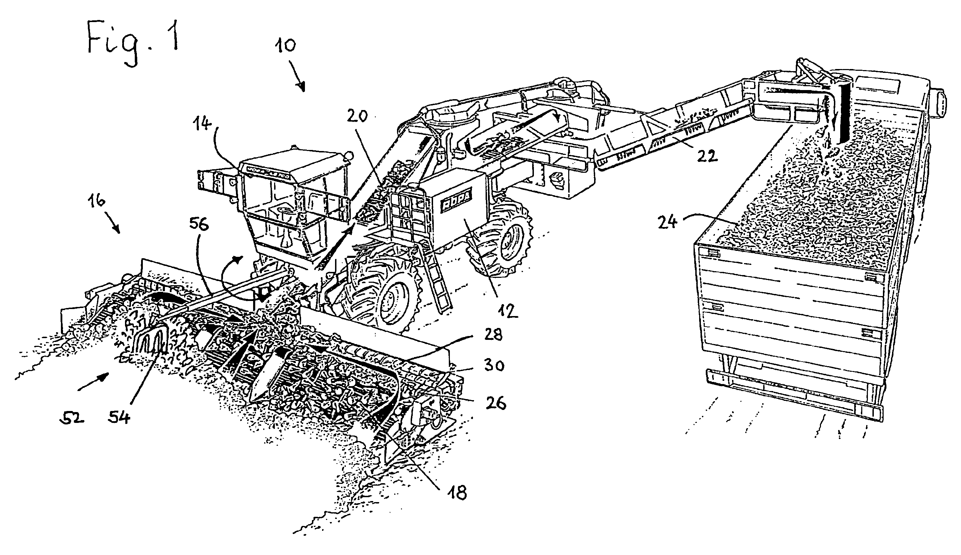

Figur 1 zeigt einen Rübenlader 10 mit einem Landbaufahrzeug 12 mit Steuerkabine 14. An der Frontseite des Landbaufahrzeuges 12 ist ein Aufnahmegerät 16 angebaut, das mit Hilfe eines Aufnehmerorgans 18 unter die Rüben eines Sammelhaufens fährt. Die aufgenommenen Rüben werden mit Hilfe des Aufnehmerorgans 18 in Richtung der eingezeichneten Pfeile zu einem mittig angeordneten Weitergabeförderer 20 transportiert, der als Bauchgurt ausgebildet ist und die Rüben in bekannter Weise zu einem heckseitig angebrachten Überlader 22 transportiert. Der Überlader 22 fördert die auf dem gesamten Weg vom Erdreich befreiten Rüben in einen bereitstehenden Lastkraftwagen 24.

Das Aufnahmegerät 16 der Figur 1 hat in bekannter Weise das bereits erwähnte Aufnehmerorgan 18 in Form von Aufnahmeketten, das an seinem oberen Ende die Rüben über eine Auskämmwalze 26 auf drei parallel hintereinander angeordnete Sammelwalzen 28 fördert. Die Sammelwalzen 28 sind als Schneckenwalzen ausgebildet, deren Schraubengänge 30 so verlaufen, daß die Rüben in Richtung auf den mittig angeordneten Weitergabeförderer 20 transportiert werden, der im dargestellten Fall der Figur 1 als Bauchgurt ausgebildet ist.

Damit die Rüben etwa gleichmäßig über die Breite des Aufnahmegerätes 16 verteilt werden, ist vor und über dem Aufnehmerorgan 18 eine Räumeinrichtung 52 angeordnet, die einen quer über dem Aufnehmerorgan 18 hin- und herbeweglichen, gabelförmigen Schieber 54 hat. Dieser steht vom Ende eines teleskopischen Schwenkarms 56 nach unten ab und greift in den Rübenhaufen, aus dessen Mitte er die Rüben während der Übernahme durch das Aufnehmerorgan 18 nach beiden Seiten hinverteilt, sodaßdiese in Richtung der eingezeichneten Pfeile zu dem mittig angebrachten Weitergabeförderer 20 gelangen. Der in Richtung des Doppelpfeiles schwenkbare Arm 56 ist an einer vertikalen Achse am Fahrzeug 12 gelagert. Während der Schwenkbewegung durch einen nicht weiter dargestellten Antrieb kann dieser dafür sorgen, daß der Teleskoparm 56 periodisch ein- und ausgefahren wird, damit sich der Schieber 54 annähernd auf einer Geraden bewegt.

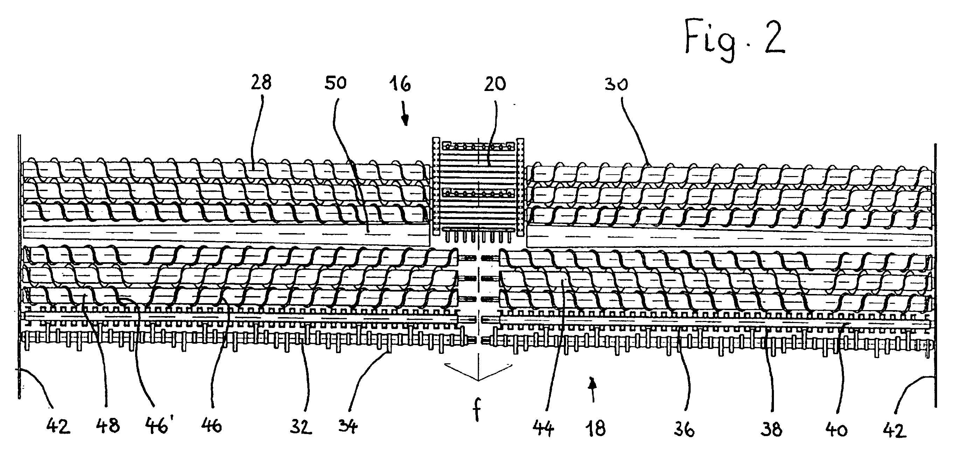

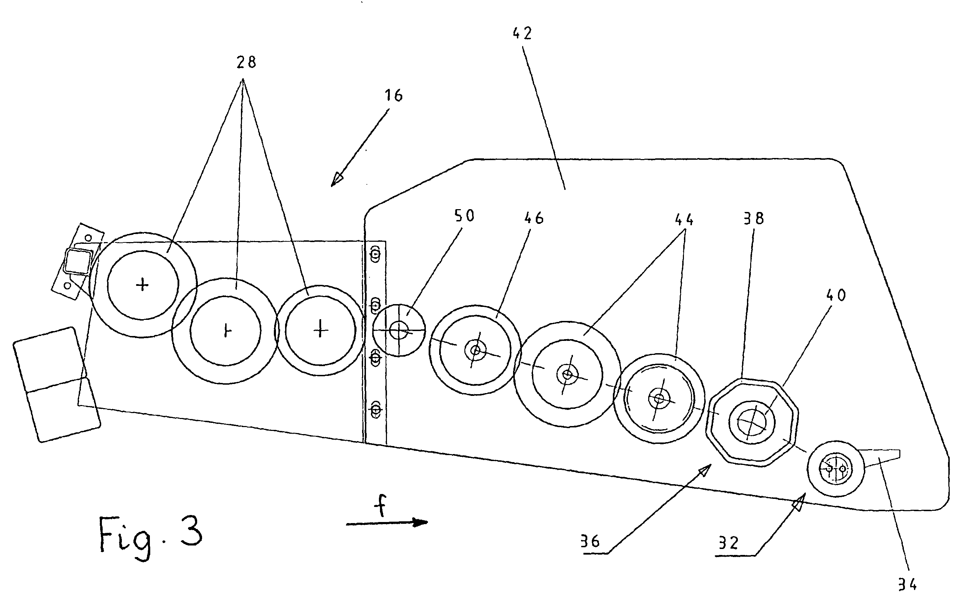

Die Figuren 2 und 3 zeigen ein Aufnahmegerät 16, das gemäß der Erfindung ausgebildet ist. Dieses hat ebenfalls am in Fahrtrichtung f vorderen Ende ein Aufnehmerorgan 18, das hier als Fingerwalze 32 ausgebildet ist, von der radiale Finger 34 abstehen, die schraubengangartig angeordnet sind. Hinter den beiden axial nebeneinander angeordneten Fingerwalzen 32 befinden sich zwei ebenfalls axial nebeneinander gelagerte Putzerwalzen 36 (Auskämmwalzen), von denen jede aus einer Vielzahl sechseckiger Scheiben 38 besteht, welche so auf einer Welle 40 befestigt sind, daß die Finger 34 der Fingerwalze 32 in die Zwischenräume der Scheiben 38 eingreifen können.

Zur seitlichen Lagerung der Fingerwalzen 32 und der Putzerwalzen 36 sind an beiden Seiten des Aufnahmegerätes 16 Platten 42 angebracht, in denen nicht weiter dargestellte Lager sitzen; die Platten 42 dienen gleichzeitig als Ablenkorgane für die Rüben und verhindern, daß diese während der Aufnahme und des Weitertransports seitlich von dem Aufnahmegerät 16 herunterfallen. Die mittige Lagerung der genannten Walzen 32 und 36 ist nicht weiter dargestellt; in Figur 2 ist zu erkennen, daß die entsprechenden Wellenenden so ausgebildet sind, daß sie in Lager eingreifen können.

Am oberen Ende des Aufnahmegerätes 16 sind zu beiden Seiten des bekannten, mittig angeordneten Weitergabeförderers 20 je drei Sammelwalzen 28 gelagert, deren Achsen im wesentlichen parallel zu den Längsachsen der Fingerwalzen 32 und der Putzerwalzen 36 verlaufen. Die Schraubengänge 30 der als Schneckenwalzen ausgebildeten Sammelwalzen 28 sind so ausgerichtet, daß sie die Rüben von den beiden seitlich angebrachten Platten 42 zur Mitte hin, d. h. auf den Weitergabeförderer 20 transportieren.

Gemäß der Erfindung ist hiervorgesehen, daß in Fahrtrichtung f hinter den beiden Putzerwalze 36 und vor den Sammelwalzen 28 Verteilerwalzen 44 eingebaut sind, die ebenfalls als Schneckenwalzen ausgebildet sind. Wie Figur 2 zeigt, sind beim Ausführungsbeispiel auf beiden Seiten des Aufnahmegerätes 16 je drei Verteilerwalzen 44 vorgesehen, deren Achsen im wesentlichen parallel zueinander verlaufen. Die Schraubengänge 46 der Verteilerwalzen 44 verlaufen auf dem größten Teil der Länge der Verteilerwalzen 44 gegenläufig zu den Schraubengängen 30 der Sammelwalzen 28, so daß die aufgenommenen Rüben in Richtung auf die beiden seitlichen Platten 42 des Aufnahmegerätes 16 verteilt werden, wodurch eine gegenüber der bisher unvermeidlichen Haufenbildungen eine Vereinzelung der Rüben stattfindet, die bis zur Übergabe auf die Sammelwalzen 28 einen verhältnismäßig langen Weg zurücklegen, der zu einer besseren Reinigung beiträgt.

Wie Figur 2 zeigt, sind im Bereich der äußeren, in den beiden seitlichen Platten 42 gelagerten Enden die Verteilerwalzen 44 so ausgebildet, daß sie dort etwa einem Viertel der Länge entsprechenden Abschnitt 48 haben, auf dem die Schraubengänge 46' gegenläufig zu den Schraubengängen 46 verlaufen, so daß dort eine Umkehrung der Förderrichtung stattfindet und die Rüben von den seitlichen Platten 42 nach innen hin gefördert werden.

An die in Fahrtrichtung f letzten beiden, axial hintereinander liegenden Verteilerwalzen 44 schließen sich zwei konische Übergabewalzen 50 an, die eine glatte Oberfläche haben und so eingebaut sind, daß die Enden kleineren Durchmessers an den beiden seitlichen Platten 42 gelagert sind. Diese beiden Übergabewalzen 50 sorgen für einen störungsfreien Weitertransport der Rüben zu den Sammelwalzen 28, die diese zur Mitte hin auf den Weitergabeförderer 20 transportieren.

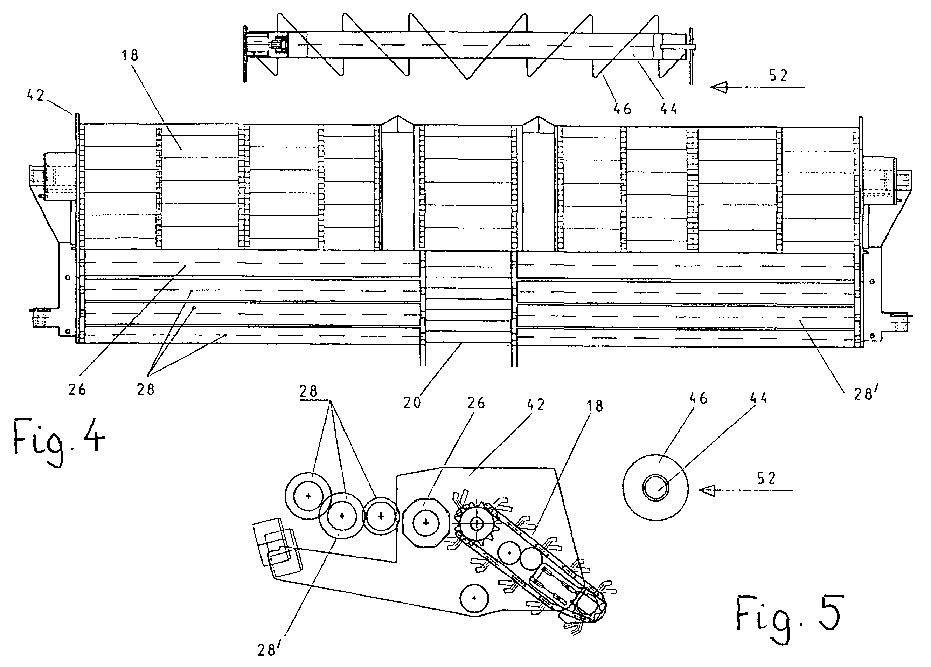

Die Figuren 4 und 5 zeigen eine Variante, bei der die Räumeinrichtung 52 aus einer Verteilerwalze 44 besteht, die über dem Aufnehmerorgan 18 in Form von Aufnahmeketten angebracht ist. Die Verteilerwalze 44 ist eine Schneckenwalze, deren Schraubengänge 46 von der Mitte aus in Richtung auf die seitlichen Platten 42 hin gegenläufig sind, so daß auch hier die aufgenommenen Rüben über die Breite des Aufnehmerorgans 18 verteilt werden. Die Reinigungswirkung des Aufnahmegerätes 16 wird zusätzlich dadurch verbessert, daß wenigstens eine der Sammelwalzen 28, beispielsweise die mittleren Sammelwalzen 28', gegenläufig zu den benachbarten Sammelwalzen rotiert, so daß dadurch das von den Rüben abgefallene Erdreich zerquetscht und durch den Spalt zwischen den Sammelwalzen 28, 28' nach unten abgeworfen wird.

## Patentansprüche

1. Aufnahmegerät für eine selbstfahrende Lade- und Reinigungsvorrichtung für Zuckerrüben oder dgl. mit einem in Fahrtrichtung vorn angebrachten Aufnehmerorgan (18) und nachgeordneten Sammelwalzen (28) für die Übergabe der Rüben in einen Weitergabeförderer (20), **dadurch gekennzeichnet, daß** dem Aufnehmerorgan (18) eine Einheit zum Verteilen der Rüben über die Breite des Aufnahmegerätes (16) zugeordnet ist, welche aus wenigstens einer die Rüben seitlich nach außen fördernden Verteilerwalze (44) besteht, die über dem Aufnehmerorgan (18) oder zwischen dem Aufnehmerorgan (18) und den Sammelwalzen (28) angeordnet ist, und daß zwischen den Verteilerwalzen (44) und den Sammelwalzen (28) eine konische Übergabewalze (50) angeordnet ist, deren Ende kleineren Durchmessers an der Außenseite des Aufnahmegerätes (16) liegt.

2. Aufnahmegerät nach Anspruch 1, **dadurch gekennzeichnet, daß** die Verteilerwalze (44) als Schneckenwalze ausgebildet ist.

3. Aufnahmegerät nach Anspruch 2, **dadurch gekennzeichnet, daß** jede Schneckenwalze an ihrem äußeren Ende einen Abschnitt (48) mit zu den übrigen Schraubengängen (46) nach innen fördernden Schraubengängen (46') hat.

4. Aufnahmegerät nach einem der vorhergehenden Ansprüche, **dadurch gekennzeichnet, daß** wenigstens eine Sammelwalze (28') eine zu den benachbarten Sammelwalzen (28) entgegengesetzte Drehrichtung hat.

## Claims

1. Pick-up for a self-propelled sugar-beet loader-cleaner or the like, comprising a front pick-up device (18) and downstream collecting rollers (28) for feeding the beet into a conveyor (20), **characterized in that** the pick-up device (18) is provided with a distribution unit distributing the beet over the width of the pick-up (16), said distribution unit having at least one distributor roller (44) transporting the beet laterally to its external ends, said distributor roller (44) being positioned above the pick-up device (18) or between the pick-up device (18) and the collecting rollers (28), wherein between the distributor rollers (44) and the collecting rollers (28) a conical transfer roller (50) is provided, the smaller end of which being positioned at the external end of the pick-up (16).

2. Pick-up according to claim 1, wherein said distributor roller (44) is a screw roller.

3. Pick-up according to claim 2, wherein each of the screw rollers has at its external ends a portion (48) with a helical gear (46') opposed to the remainder gear (46) for transporting the beet to the center.

4. Pick-up according to anyone of the preceding claims, wherein at least one collecting roller (28') is rotating in opposite direction to that of the adjacent collecting rollers (28).

## Revendications

1. Dispositif ramasseur pour un chargeur-nettoyeur automobile pour betteraves à sucre ou autres, avec un organe ramasseur (18) qui est monté à l'avant dans le sens de la marche et des rouleaux collecteurs (28) qui sont placés derrière pour le transfert des betteraves dans un convoyeur de transport ultérieur (20), **caractérisé en ce que** l'organe ramasseur (18) est équipé d'une unité pour la répartition des betteraves sur la largeur du dispositif ramasseur (16), cette unité étant composée d'au moins un rouleau répartiteur (44) qui entraîne les betteraves latéralement vers l'extérieur et qui est monté au-dessus de l'organe ramasseur (18) ou entre l'organe ramasseur (18) et les rouleaux collecteurs (28), et **en ce qu'**entre les rouleaux répartiteurs (44) et les rouleaux collecteurs (28) est monté un rouleau de transfert conique (50) dont l'extrémité qui a le plus petit diamètre se trouve sur la face extérieure du dispositif ramasseur (16).

2. Dispositif ramasseur selon la revendication 1, **caractérisé en ce que** le rouleau répartiteur (44) est conçu comme un rouleau à vis sans f in.

3. Dispositif ramasseur selon la revendication 2, **caractérisé en ce que** chaque rouleau à vis sans fin présente à son extrémité extérieure un segment (48) avec des pas de vis (46') qui entraînent les betteraves vers l'intérieur par rapport aux pas de vis restants (46).

4. Dispositif ramasseur selon l'une des revendications précédentes, **caractérisé en ce qu'**au moins un rouleau collecteur (28') a un sens de rotation contraire à celui des rouleaux collecteurs voisins (28).
